# EUROPEAN PATENT SPECIFICATION

(11) **EP 2 128 287 B1**
(45) Date of publication and mention of the grant of the patent: **19.01.2011**
(21) Application number: 09160347.2
(22) Date of filing: 15.05.2009
(51) Int. Cl.: C22C 26/00, B22F 7/06, B24D 3/10

(54) **Method of making a composite diamond body**
Verfahren zur Herstellung eines Verbunddiamantkörpers
Procédé de fabrication d'un corps en diamant composite

(30) Priority: 21.05.2008 SE 0801175
(43) Date of publication of application: 02.12.2009
(73) Proprietor: Sandvik Intellectual Property AB, 811 81 Sandviken (SE)
(72) Inventor: Martensson, Malin, SE 131 33, Nacka (SE); Bhosale, Shirishkumar, 4711021, Phune (IN); Goswami, Anand, 415605, Chiplun (IN); Prabhune, Shailesh, 411038, Pune (IN)
(74) Representative: Hägglöf, Henrik

(56) References cited:
- EP-A- 1 033 414
- WO-A-2008/053430
- JP-A- 2005 336 565
- US-A- 4 063 909
- US-A- 4 403 015

## Description

The present invention relates to a method of producing a composite diamond body comprising the addition of diamond particles, and powder(s) forming the binder phase comprising cobalt, wherein the cobalt powder has mainly a face centered cubic (fcc) structure. The present invention also relates to a composite diamond body made according to the method of the invention.

### Background

Depending on composition and grain size, a wide range of diamond materials can be used in many applications, for instance in rock drilling, metal cutting tools and in wear parts. Examples of materials to be machined are concrete, metals, and natural stone such as granite, marble, sandstone, limestone, etc. Usually, due to its brittleness composite diamond bodies are preferably placed onto a substrate with a higher toughness, for example cemented carbide or metal, often during the manufacturing of the composite diamond body.

The use of cobalt as a binder phase when manufacturing composite diamond bodies is well known in the art.

Cobalt is allotropic, that is, at temperatures less than about 417°C, pure cobalt atoms are arranged in a hexagonal close packed (hcp) structure and at temperatures above about 417°C, pure cobalt atoms are arranged in a face centered cubic (fcc) structure. Thus, above 417°C, pure cobalt exhibits an allotropic transformation, i.e., the hcp-structure changes to fcc-structure.

The cobalt powder conventionally used when manufacturing composite diamond bodies mainly has an hcp-structure. However, in a sintered body, the cobalt binder phase has an fcc-structure which is obtained during the sintering operation or the hot pressing operation.

During manufacturing of composite diamond bodies it is important that the cobalt powder is easily dispersed during mixing.

One of the important properties for composite diamond tool making is good pressing properties, i.e., the ability of achieve high density in the pressed body. Powders which are able to be pressed into bodies having high density will have less pores which is an advantage since pores can cause problems during machining.

It is also an advantage to have a high strength of the pressed body since it makes it less prone to crack or be deformed during handling.

A common phenomenon when making composite diamond bodies is that the hardness decreases when high sintering temperatures are used. A high sintering temperature is for example, beneficial when tungsten carbide is added to improve the hardness and the wear properties.

Also, there is a constant need for improving the tool life of the composite diamond containing tools. Longer tool life is a great advantage in many applications since changing tools is a very time consuming step. An increased hardness of the composite diamond tool improves the tool life.

It is an object of the present invention to provide a method of making composite diamond bodies with improved pressing properties and an improved strength of the pressed body.

It is a further object of the present invention to provide a method of making a composite diamond body having an increased tool life.

It is yet a further object of the present invention to provide a method of making a composite diamond body where an increased sintering temperature can be used without a drop in hardness.

It is yet a further object of the present invention to provide a composite diamond body made according to the method of the invention.

It has now surprisingly been found that cobalt powders mainly having a fcc-structure, can be used when manufacturing composite diamond bodies and that the use of such fcc-cobalt instead of cobalt mainly having an hcp-structure gives several advantages, both during the production of such composite diamond bodies as well as for the composite diamond body.

### Description of drawings

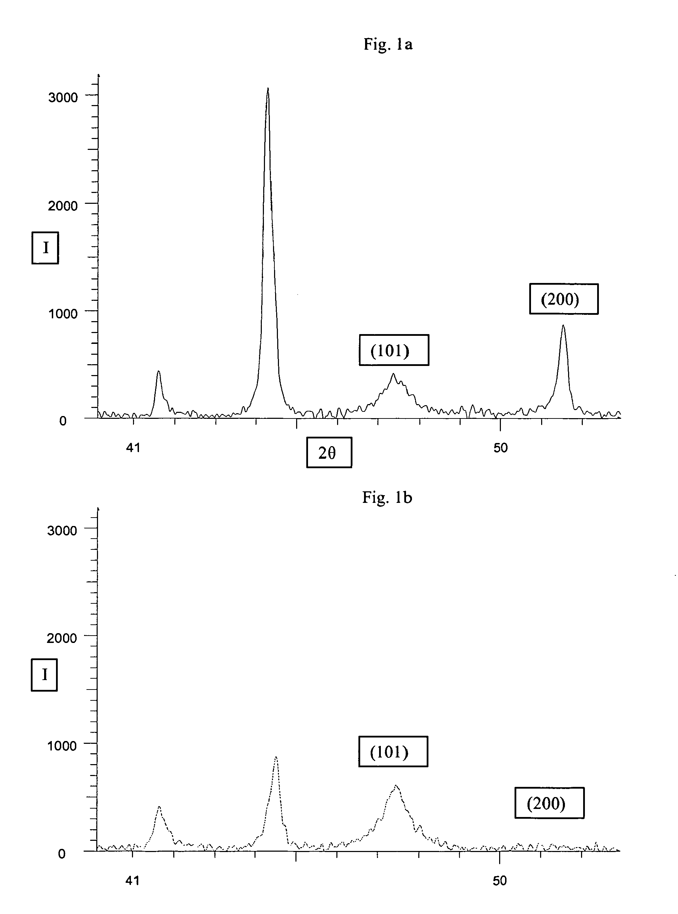

Fig. 1a shows the XRD pattern from an ultrafine cobalt powder according to the present invention characterized by a Co-fcc(200)/Co-hcp(101) ratio of 2.12. The powder has a Fischer grain size (FSSS) of 1.08 µm.
Fig. 1b shows the XRD pattern from a commercial ultrafine cobalt powder with a Co-fcc(200)/Co-hcp(101) ratio of 0.08 and an FSSS of 0.7 µm.

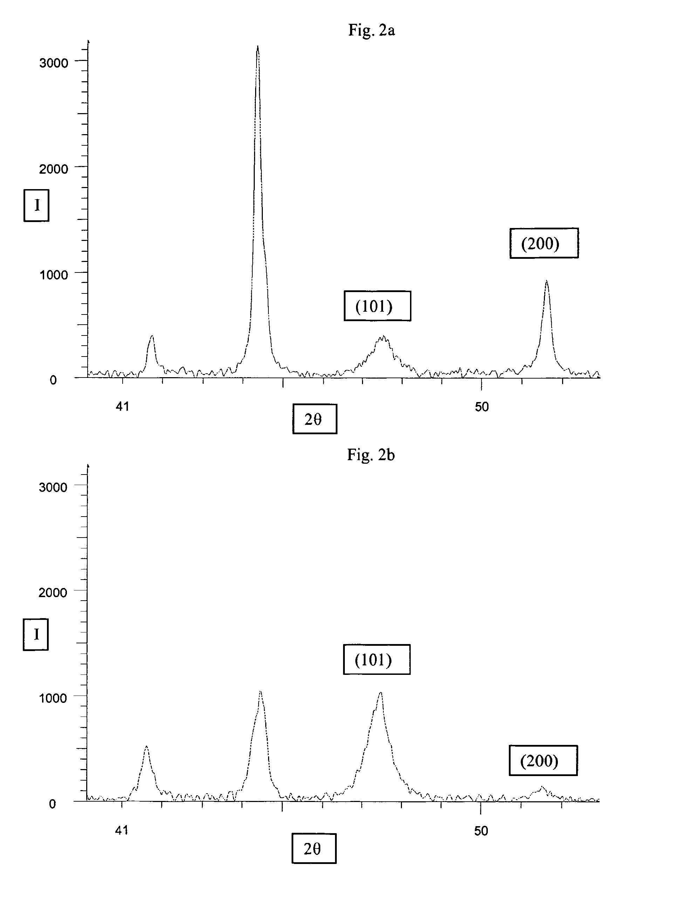

Fig. 2a shows the XRD pattern from a extrafine cobalt powder according to the present invention characterized by a Co-fcc(200)/Co-hcp(101) ratio of 2.24. The powder has a Fischer grain size (FSSS) of 1.45 µm.
Fig. 2b shows the XRD pattern from a commercial extrafine cobalt powder with a Co-fcc(200)/Co-hcp(101) ratio of 0.14 and an FSSS of 1.4 µm.

### Detailed description of the present invention

The method according to the present invention comprises the steps of:
- providing powders of diamond particles,
- providing powder(s) forming a binder phase comprising cobalt powder,
- subjecting the powders of diamond particles and powder(s) forming a binder phase comprising cobalt powder to a pressing and sintering operation.

The cobalt used in the process of the present invention has mainly a fcc-structure. The amount of cobalt having mainly fcc-structure is characterized by XRD and the identification is given from the structural information taken from the public PDF-database (Powder Diffraction File by the International Centre for Diffraction Data, ICDD) and represents the chemical compounds of interest i.e., fcc-cobalt (PDF 15-806) and hcp-cobalt (5-727). Additionally the Miller index of each metallic phase is given above each peak. At XRD measurements with a 2θ/θ focusing geometry and Cu-Kα radiation with subsequent background subtraction and Kα₂-stripping, the peak height ratio between the Co-fcc(200)/Co-hcp(101) being ≥1/2 preferably ≥2/3, more preferably ≥1 and most preferably ≥2, as measured between the baseline and maximum peak height for each peak. The maximum amount of fcc-cobalt is 100% for which the above mentioned peak height ratio →∞. The cobalt powder described above which is used in the method according to the present invention will hereinafter be referred to as "fcc-cobalt".

The cobalt powder used in the method according to the present invention preferably comprises iron in an amount of less than 1.5 wt%, preferably less than 0.8 wt% and most preferably less than 0.4 wt%. The cobalt powder further preferably contains at least 100 ppm Mg, more preferably at least 150 ppm Mg and most preferably 200 to 500 ppm Mg. The ppm values are based on weight.

The cobalt powder can also contain other elements but in amounts corresponding to technical impurities, preferably below 800 ppm, more preferably below 700 ppm and most preferably below 600 ppm.

The grain size of the cobalt powder, measured as FSSS (Fischer grain size), is preferably from 0.2 to 2.9 µm, more preferably from 0.3 to 2.0 µm and most preferably from 0.4 to 1.5 µm.

The mean particle size (d50) of the cobalt powder, measured with laser diffraction, is preferably from about 0.8 to about 5.9 µm, more preferably from 0.8 to 4.0 µm and most preferably from 0.8 to 3.0 µm.

The binder phase content in a composite diamond body greatly affects the properties of the composite body. Depending on which properties that are important for the specific application the amount of binder phase also varies. However, the amount of powder(s) forming a binder phase used in the method according to the present invention is preferably within the range of 70 to above 99 wt% of the composite diamond body.

The powder(s) forming binder phase can, in addition to the fcc-cobalt powder, comprise other binder metals such as Ni, Fe, Cu, W and Sn or alloys thereof. Also other metals such as ruthenium, rhodium, palladium, chromium, manganese, tantalum, titanium, tungsten, tantalum carbides, other ceramic carbides and alloys and mixtures thereof also may be employed. Preferably the powder(s) forming binder phase comprises at least 20 wt% Co.

The method according to the present invention can be applied to any conventional method of making composite diamond bodies. The powder(s) forming binder phase can be provided in various ways, for example by mixing the powder(s) forming binder phase with the powders of diamond particles, or as a separate layer of either powders or as a pre-pressed compact of binder phase material either below or on top of the powders of diamond particles. Binder phase can also be provided by a cemented carbide support from which the binder phase is allowed to penetrate the diamond powder during the pressing and sintering operation.

Preferably, the powders of diamond particles and binder phase powder(s) are placed onto a substrate surface and then subjected to a pressing and sintering operation, either as two separate steps or as a hot pressing operation. The substrate can be of different materials depending on the application. Examples are cemented carbide and tool steel.

The temperatures and pressures used during the method of making composite diamond tools vary within a wide range depending on the tool to be produced. For example, making composite diamond tools comprising fine grained diamond particles requires higher temperatures and pressures whereas composite diamond tools comprising more coarse grained diamond particles required lower temperatures and pressures.

In one embodiment of the present invention composite diamond bodies are manufactured using diamond particles having a small grain sizes, for example 1 µm or less. Such tools can for example be used for machining metals like aluminum.

The composite diamond bodies are preferably manufactured with a combined pressing and sintering operation which involves placing an unsintered mass of abrasive, crystalline diamond particles within a protectively shielded metal enclosure which is disposed within the reaction cell of a high temperature/high pressure (HT/HP) apparatus. Additionally placed in the enclosure with the abrasive diamond particles are powder(s) forming binder phase, as well as a pre-formed mass of a cemented metal carbide or any other suitable support material, for supporting the abrasive particles and to thereby form a supported compact. The contents of the cell then are subjected to processing conditions selected as sufficient to effect intercrystalline bonding between adjacent grains of the abrasive diamond particles and, optionally, the joining of the sintered particles to the cemented metal carbide support. The temperature and pressure for such a process step varies depending on the composition of the powders, the apparatus used, etc. The rates of the temperature and pressure increase/decrease can also be varied. Determining these parameters for each specific case are within the purview of the skilled artisan. However, preferably a temperature of at least 1300°C and a pressure of at least 20 kbar is applied.

In another embodiment of the present invention, composite diamond bodies from diamond particles having a larger grain size are made. Such tools can for example be used for machining stone etc. The specific grain size of the diamond particles depends on the application of the composite diamond tool, however typical grain sizes are in the range of 45-1000 µm.

In one embodiment, composite diamond bodies from diamond particles having a larger grain size are made by preferably mixing the diamond particles and the powder(s) forming binder phase with a pressing agent, preferably paraffin oil. The mixture is then placed onto the surface of the substrate in a mold and preferably subjected to a cold pressing operation to form green segments. The green segments are then placed into a mold, preferably of graphite, in order to be hot pressed. The hot pressing operation is performed in several steps, preferably by stepwise increasing the temperature and pressure. The parameters for this operation depend on the material chosen and the equipment used and is preferably chosen by a person skilled in the art. However, a typical temperature range for the maximum temperature is from 850 to 950°C. In one embodiment of the present invention the sintering temperature is above 900°C. The temperature increase can vary between different steps in the hot pressing operation. Also, the holding time at the temperature specific for each step in the pressing operation can vary from zero seconds up to several hundred seconds. The pressing pressure is also increased during the hot pressing operation together with the temperature and the maximum pressure that is reached during the final step is preferably between 200 to 500 kg/cm².

The amount of diamond particles in the composite diamond body made according to the present invention depends on the application of the tool. However, the diamond content in the composite diamond body is preferably at least 70% by volume.

Also, other compounds commonly used in the making of composite diamond bodies can be added in the method according to the present invention. Examples of such additives are secondary abrasives like WC, SiC, and fine grained diamond powder or solid lubricants like silver, graphite and hexagonal boron nitride.

The composite diamond body, preferably together with the supporting substrate, is then cut into pieces of different shapes depending on the application of the composite diamond body. Usually the composite diamond bodies are brazed to a substrate or holder which can be used as round tools, cutting tool inserts, wear parts, rollers, rock drilling tools, saw blades, etc.

The present invention also relates to a composite diamond body made according to the method disclosed herein. The composite diamond body comprises diamond particles and a binder phase comprising cobalt which prior to compaction and sintering mainly has an fcc-structure characterized by XRD as described above. The binder phase content in the composite diamond body varies significantly depending on the application but is preferably from 70 to above 99 wt% of the composite diamond body.

The composite bodies according to the present invention can be used in many applications. Usually the composite diamond bodies are brazed to a substrate or holder which can be used as round tools, cutting tool inserts, wear parts, rollers, rock drilling tools, saw blades etc.

The invention is further illustrated in connection with the following examples which, however, are not intended to limit the same.

### Example 1

One way to evaluate the effect of sintering temperature on hardness of composite diamond bodies is to measure the hardness of sintered bodies of pure cobalt at different sintering temperatures.

Fcc-cobalt powder according to the present invention with an FSSS grain size of 0.95 µm, a magnesium content of 0.02 wt% and with a peak height ratio between the Co-fcc(200)/Co-hcp(101) of 3/2. The peak height ratio was measured between the baseline and maximum peak height, measured by XRD with a 2θ/θ focusing geometry and Cu-Kα radiation.

The cobalt powder was placed in a mold. The powder was then pressed using a pressure of 4500 Kgf/cm². The pressed powder was then placed in a carbon mold and was then sintered at a sintering pressure of 350 Kgf/cm². The sintering temperature was varied according to Table 1. The sintering was, for all runs, starting at 540°C for 2 minutes. After that, the temperature was increased until the desired temperature was reached. That temperature was then kept for a specific holding time. The sintering temperatures and the holding time at the final sintering temperature are shown in Table 1.

For comparison, sintered cobalt bodies were prepared according to the above but by using commercial cobalt grades, intended for the same use, all having mainly an hcp-structure.

**Table 1**

| | | | | | |
|---|---|---|---|---|---|
| Sintering temperature | 750°C | 800°C | 850°C | 900°C | 950°C |
| Sintering time | 4 min, 20 sec | 4 min, 50 sec | 5 min, 20 sec | 6 min | 6 min, 30 sec |

The hardness was then measured by an Hardness Testing Machine on the HRB scale with a cemented carbide ball. Each value is an average of 9 measurements. The results are shown in Table 2.

**Table 2**

| | | | | | |
|---|---|---|---|---|---|
| Cobalt quality | 750°C | 800°C | 850°C | 900°C | 950°C |
| fcc-cobalt | 101.6 | 103.7 | 102.8 | 103.7 | 103.2 |
| Commercial 1 | 99.2 | 97.0 | 97.9 | 94.1 | 93.4 |
| Commercial 2 | 102.9 | 103.8 | 104.9 | 102.1 | 94.4 |
| Commercial 3 | 100.0 | 103.1 | 102.3 | 100.7 | 94.7 |
| Commercial 4 | 101.0 | 101.3 | 97.8 | 94.2 | 93.2 |

As can be seen in Table 2, cobalt bodies according to the present invention shows no drop in hardness at higher sintering pressures compared to cobalt bodies made with commercial cobalt grades.

### Example 2

Sintered cobalt-bodies were also prepared using free sintering at a sintering temperature of 900°C. Bodies according to the present invention was prepared from fcc-cobalt powder with an FSSS grain size of 0.95 µm, a magnesium content of 0.02 wt% and with a peak height ratio between the Co-fcc(200)/Co-hcp(101) of 3/2. The peak height ratio was measured between the baseline and maximum peak height, measured by XRD with a 2θ/θ focusing geometry and Cu-Kα radiation.

For comparison, sintered cobalt bodies were also prepared in the same way as described above but by using four different commercial cobalt grades, all having mainly an hcp-structure. The hardness was measured in the same way as in Example 3.

**Table 3**

| Cobalt quality | fcc-cobalt | Commercial 1 | Commercial 2 | Commercial 3 | Commercial 4 |
|---|---|---|---|---|---|
| HRB | 101.9 | 91.0 | 96.7 | 92.0 | 89.7 |

As can be seen in Table 3, sintered cobalt bodies according to the present invention shows a higher hardness at 900°C compared to the sintered cobalt bodies made with commercial cobalt grades.

### Example 3

The pressing properties and the strength of the pressed body were investigated for powder mixtures of diamond particles and cobalt.

Three different powder mixtures were prepared from 95.95 wt% Co, 2.56 wt% diamond particles and 1.5 wt% paraffin. First 14.394 g Co and 0.22 g paraffin was carefully ground in an agate mortar, then it was thoroughly mixed with 0.384 g diamond particles. Two cobalt qualities was tested, see table 1.

**Table 4**

| Powder No. | Cobalt quality | Grain size, µm (FSSS) | Co-fcc(200)/Co-hcp(101) |
|---|---|---|---|
| 1 | Invention | 1.0 | 2/3 |
| 2 | Ref. 1 | 0.9 | 1/10 |

The powder density was analyzed for the powder mixtures, then the powder mixtures were pressed into green bodies to maximum pressure, Pmax, of first 50 MPa and the to a Pmax of 100 MPa. The diameter of the die was 9.525 mm. The density was determined based on the dies position, i.e., the height of the green body, after reaching each maximum pressure. The results can be seen in Table 5.

**Table 5**

| Powder No. | Powder density, (g/cm³) | Density green body at Pmax 50 MPa, (g/cm³) | Density green body at Pmax 100 MPa, (g/cm³) |
|---|---|---|---|
| 1 | 1.19 | 4.12 | 4.54 |
| 2 | 1.30 | 3.91 | 4.24 |

The axial strength of the green bodies was also measured and it is the maximum crushing pressure registered during compact crushing along the axial (parallel to pressing) direction. This is the green strength responsible for holding the compact together during ejection from a die. The results can be seen in Table 6.

**Table 6**

| Powder No. | Axial strength(MPa) at Pmax 50 MPa | Axial strength(MPa) at Pmax 100 MPa |
|---|---|---|
| 1 | 2.4 | 8.8 |
| 2 | 1.3 | 3.6 |

## Claims

1. Method of producing a composite diamond body comprising the steps of:
- providing powders of diamond particles,
- providing powder(s) forming a binder phase comprising cobalt powder,
- subjecting the powders of diamond particles and powder(s) forming a binder phase comprising cobalt powder to a pressing and sintering operation,
**characterized in that** the cobalt powder having a grain size, FSSS, of 0.2-2.9 µm and comprising mainly cobalt having an fcc-structure with a peak height ratio Co-fcc(200)/Co-hcp(101) ≥1/2, where the peak height is measured between a baseline and a peak height maximum in an XRD pattern for the cobalt powder determined by XRD using a 2θ/θ focusing geometry and Cu-Kα radiation.

2. Method according to claim 1, **characterized in that** the peak height ratio between the Co-fcc(200)/Co-hcp(101) being ≥2/3.

3. Method according to any of the preceding claims, **characterized in that** the peak height ratio between the Co-fcc(200)/Co-hcp(101) being ≥1.

4. Method according to any of the preceding claims, **characterized in that** the amount of added powder(s) forming binder phase is 70 to above 99 wt%.

5. Method according to any of the preceding claims, **characterized in that** the cobalt powder contains at least 100 ppm Mg.

## Patentansprüche

1. Verfahren zum Herstellen eines Diamant-Komposltkörpers, welches die Schritte aufweist:
- Bereitstellen von Pulvern aus Diamantteilchen,
- Bereitstellen von Pulver(n), die eine Binderphase bilden und die Kobaltpulver aufweisen,
- Durchführen eines Press- und Sintervorganges mit den Pulvern aus Diamantteilchen und Pulver(n), welche eine Binderphase bilden, die Kobaltpulver aufweist,
- **dadurch gekennzeichnet, dass** das Kobaltpulver eine Komgröße FSSS von 0,2 bis 2,9 µm hat und hauptsächlich Kobalt aufweist, das eine fcc-Struktur hat, mit einem Peakhöhenverhältnis Co-fcc(200)/Cohcp(101) ≥ 1/2, wobei die Peakhöhe zwischen einer Basislinie und einem Peakhöhenmaximum in einem XRD-Muster bzw. -Spektrum für das Kobaltpulver gemessen wird, welches bestimmt wird durch XRD unter Verwendung einer 2θ/ θ Fokussiergeometrie und einer Cu-Kα-Strahlung.

2. Verfahren nach Anspruch 1, **dadurch gekennzeichnet, dass** das Peakhöhenverhältnis zwischen Co-fcc (200)/Co-hcp(101) ≥ 2/3 ist.

3. Verfahren nach einem der vorstehenden Ansprüche, **dadurch gekennzeichnet, dass** das Peakhöhenverhältnis zwischen Co-fcc(200)/Co-hcp(101) ≥ 1 ist.

4. Verfahren nach einem der vorstehenden Ansprüche, **dadurch gekennzeichnet, dass** die Menge hinzugefügten Pulvers, welches die Binderphase bildet, zwischen 70 und über 99 Gew.-% liegt.

5. Verfahren nach einem der vorstehenden Ansprüche, **dadurch gekennzeichnet, dass** das Kobaltpulver zumindest 100 ppm Mg enthält.

## Revendications

1. Le procédé de fabrication d'un corps composite en diamant comprenant les étapes de :
- fourniture de poudres de particules de diamant,
- fourniture de poudre(s) formant une phase de liant comprenant une poudre de cobalt,
- compression et frittage des poudres de particules de diamant et de la ou des poudre(s) formant une phase de liant comprenant une poudre de cobalt,
**caractérisé en ce que** la poudre de cobalt possède une taille de grain Fischer FSSS, de 0,2 à 2,9 µm et comprenant principalement du cobalt possédant une structure cubique face centrée avec un ratio de hauteurs de pics cobalt-cubique face centrée (200) / cobalt-hexagonal compact (101) ≥ 1/2, la hauteur de pic étant mesurée entre une ligne de base et une hauteur de pic maximum d'après un motif de diffraction de rayons X de la poudre de cobalt, obtenu par diffraction de rayons X en utilisant une géométrie de focalisation 2θ/θ et une radiation Cu-Kα.

2. Le procédé selon la revendication 1, **caractérisé en ce que** le ratio de hauteurs de pics cobalt-cubique face centrée (200) / cobalt-hexagonal compact (101) est ≥ 2/3.

3. Le procédé selon la revendication 1, **caractérisé en ce que** le ratio de hauteurs de pics cobalt-cubique face centrée (200) / cobalt-hexagonal compact (101) est ≥ 1.

4. Le procédé selon l'une quelconque des revendications précédentes, **caractérisé en ce que** la quantité de poudre(s) ajoutée formant une phase de liant est de 70 à au-delà de 99 % en poids.

5. Le procédé selon l'une quelconque des revendications précédentes, **caractérisée en ce** la poudre de cobalt contient au moins 100 ppm de magnésium.
